# EUROPEAN PATENT SPECIFICATION

(11) **EP 1 311 937 B1**
(45) Date of publication and mention of the grant of the patent: **16.04.2008**
(21) Application number: 00935802.9
(22) Date of filing: 09.06.2000
(51) Int. Cl.: G06F 3/023

(54) **AN ALPHABET CHARACTER INPUT DEVICE**
ALPHABETISCHES ZEICHENEINGABEGERÄT
DISPOSITIF D'ENTREE DE CARACTERES ALPHABETIQUES

(43) Date of publication of application: 21.05.2003
(73) Proprietor: Teo, Seng Kee Bahby, Singapore 550418 (SG)
(72) Inventor: Teo, Seng Kee Bahby, Singapore 550418 (SG)
(74) Representative: Howe, Steven
(86) International application number: PCT/SG2000/000083
(87) International publication number: WO 2001/095081

(56) References cited:
- DE-A- 4 221 801
- JP-A- 11 015 884
- US-A- 5 073 054
- US-A- 5 336 001
- DATABASE WPI Derwent Publications Ltd., London, GB; AN 1978-D3329A, XP002905577 & FR 2 359 707 A (MARSAN) 31 March 1978
- DATABASE WPI Derwent Publications Ltd., London, GB; AN 1997-527568, XP002905578 & CN 1 127 380 A (ZHANG) 24 July 1996
- DATABASE WPI Derwent Publications Ltd., London, GB; AN 1997-536754, XP002905579 & CN 1 127 895 A (LISS) 31 July 1996
- DATABASE WPI Derwent Publications Ltd., London, GB; AN 1999-071426, XP002905580 & CN 1 194 398 A (WUHH) 30 September 1998

## Description

This invention relates to an alphabet character input device more particularly but not exclusively to a keyboard or keypad for use with a computer, electronic typewriter, word processor, digital assistant, personal organizer or suchlike.

The traditional and widely-used QWERTY keyboard came about during the days of the mechanical typewriter, and was designed to reduce typing speed and avoid commonly pressed keys in close proximity in order to prevent the keys' striker-levers from jamming.

There are several inherent problems with the QWERTY keyboard. Firstly, it is difficult to leam, needing weeks if not months of instruction and practice. Consequently, a large number of keyboard users have never learned to type efficiently, and have to constantly look down at the keyboard in order to pick and peck. This leads to the second problem - poor posture, a cause of fatigue and strain and pain in the neck and shoulders. Thirdly, and more importantly, because the keyboard is not user-friendly it dissuades certain groups of potential users and retards the accessibility and growth of computer use and technology.

Another problem with conventional keyboards and another legacy of the mechanical typewriter is the traditional rectangular keyboard design. This was designed to conform to the needs of the machine rather than to the hands. The arrangement of the keys, in lateral straight lines, forces the wrists to contort at an angle, causing strain and repetitive movement illnesses such as carpal tunnel syndrome.

US 6073054 teaches a device which is an electronic dictionary or language translator, having a keypad which is for single-handed use. DE 4221801 describes a keypad on which number keys are arranged in parallel rows. US 5336001 teaches a keyboard comprising a left section and a right section, for operation by a user's respective hands and angled with respect to each other. US 6053647, discloses a keyboard in which the letters are arranged alphabetically between two halves of the keyboard. US 12929 discloses a Telegraphic key apparatus. US 4180337 relates to a keyboard in which the vowel keys are arranged vertically on the leftmost column of the keyboard, when viewed in the direction of use and is meant for single-handed operation.

FR 2 359 707 discloses a keyboard in which keys may be arranged in an arc.

In spite of the advance towards the use of the electronic keyboards, the QWERTY and rectangular designs are still being widely used, more out of inertia than good sense. The rare and relatively unsuccessful attempts to reclify the situation include:
a. the angled "Microsoft" keyboard, and various ergonomic split keyboards which retain the QWERTY key arrangement, and hence the related difficulties mentioned above
b. the Dvorak keyboard, which replaces the QWERTY key arrangement with an arrangement that takes into account frequency of use of the various alphabets. Although some improvement over the QWERTY, the Dvozak key arrangement is still not intuitive and requires relearning and a good deal of memorization.

According to the present invention there is provided an alphabet character input device as claimed in claim 1. The alphabet character input device comprises a plurality of alphabet character keys comprising consonant and vowel keys, said keys being laid out in a first hand portion of the device for operation by a first hand of a user, and in a second hand portion of the device for operation by a second hand of the user. The first hand portion is provided with a plurality of the consonant and all of the vowel keys. The consonant keys are divided into a plurality of alphabetically ordered groups each group being alphabetically separated from the next by a vowel. The second hand portion is provided with the rest of the alphabet character keys. The vowels keys are arranged in alphabetical order in an arc. The vowel keys upon which the thumb and the little finger would be placed when the fingers of a left hard of a user naturally fall on the vowel keys are made larger then the rest of the vowel keys.

Preferably, the keys of each group are in a separate row. The spacing between the vowel keys at at least one end of the group may be greater than the spacing at the middle of the group. The vowel keys may furthermore be disposed at a suggested position of rest of the typing fingers of one hand of a user.

Preferably a space key, a return key and 3 consonant keys are disposed at a suggested position of rest of the typing fingers of one hand of a user.

Each consonant group is preferably distinguishable from the others by sight or touch and the vowel preceding the group may be identifiable in the same way as the group. The groups may be colour coded.

Preferably the keys may be divided into two spaced regions, the keys of each region being preferably disposed substantially in rows angled relative to each other. The rows of each region may form a V-shape, the angle may be adjustable, the consonant keys may be divided alphabetically between the regions and the vowel keys may be provided in one said region.

Preferably a plurality of further keys may be provided, the further keys being distinguishable from the alphabet keys by touch and/or sight. The finger engaging surfaces of one of the further keys and the alphabet keys may be convex and the other concave. The further keys may comprise function keys.

Preferably at least some of the alphabet keys are aligned in a rectangular grid.

At least one anchor key is preferably defined from amongst the alphabet keys, the anchor key being at a suggested position of rest of a typing finger of one hand of a user and wherein the anchor key is identifiable by touch. The anchor key may have a dimple or protrusion.

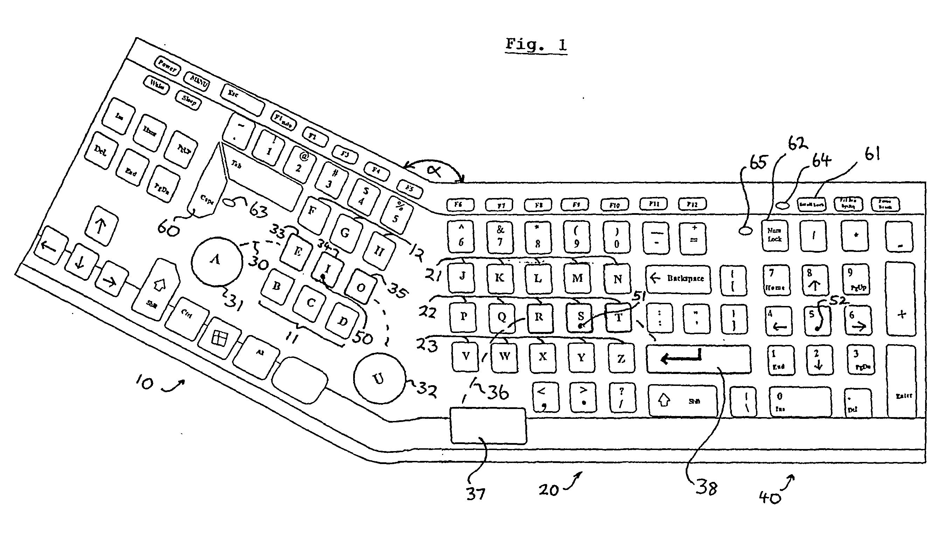

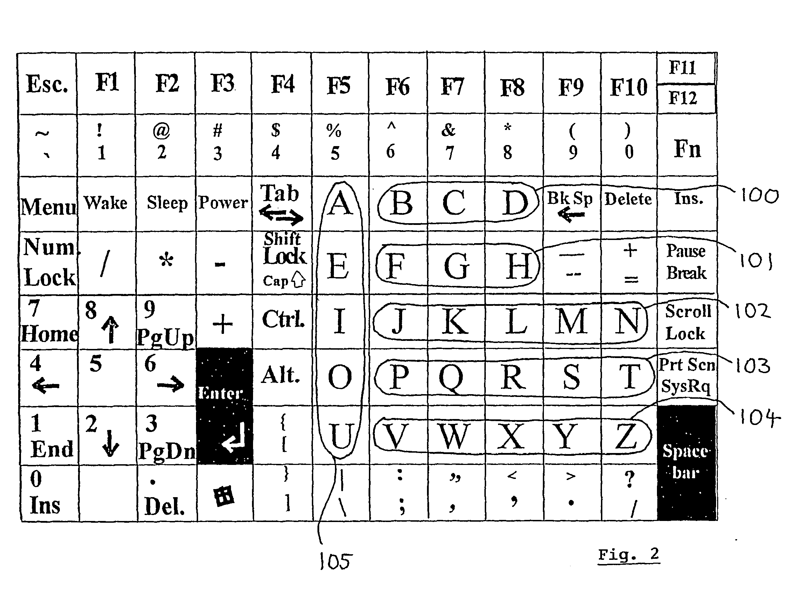

A preferred topological arrangement of alphabet keys is substantially as shown in Figure 1 or Figure 2 of the accompanying drawings.

The device may be a keyboard or a touch-sensitive screen, in the case of the latter, the keys are provided as images on the screen.

The spacing between five keys may be greater between the thumb key and adjacent key and/or between the little finger key and adjacent key than between the intervening keys and at least one of the thumb key and little finger key may be larger than the others of the five keys.

An embodiment of the invention will now be described by way of example with reference to the accompanying drawings in which :
Figure 1 is a schematic plan view of a keyboard, being a first embodiment of the invention; and
Figure 2 is a schematic plan view of a screen of a palmtop-style organizer.

With reference to Figure 1 a keyboard being a first embodiment of the invention is shown. The keyboard is arranged as two regions In a V-shape configuration to conform to the natural position of the hands in a typing position. The angle α between the regions is approximately 125 degrees. The angle of the V may be set to that angle or the keyboard may be provided with a hinge so that the angle may be altered depending on the user's preference. The left hand region generally designated 10 contains keys for the five vowels A E I O U and all the consonants from B to H. The right hand region generally designated 20 contains keys for the remaining consonants from J to Z, The consonants keys are divided into a plurality of alphabetically ordered groups 11, 12, 21, 22 and 23. The consonants groups 11, 12, 21, 22, 23 are arranged in separate lines, each group 11, 12, 21. 22, 23 being alphabetically separated from the next by a vowel. The vowels themselves are arranged in a further group 30 of keys 31 - 35 arranged in an arc. The keys of the vowel group 30 are arranged in alphabetical order A E I O U and are positioned so that the fingers of the left hand naturally fall on the vowel keys. To assist this, vowel keys A (key 31) and U (key 32) upon which the thumb and little finger would be placed are made larger and are spaced further from the remaining vowel keys 33 - 35. A similar arcuate group 36 to vowel group 30 is formed between frequently used consonant keys RST, space key 37 and return key 38. Like group 30, the space key 37 and return key 38 of group 36 are larger than the intervening consonant keys RST.

In order to assist visual identification of the consonant groups by the user, the keys of each group have a different colour which is shared by the vowel which precedes that group. For example vowel key A (31) and consonant keys BCD (group 11) may be coloured red. Vowel key E (33) and consonant keys FGH (group 12) may be coloured light blue. Vowel key I (34) and consonant keys JKLMN (group 21) may be coloured dark blue, vowel key O (35) and consonant keys PQRST (group 22) may be coloured grey and vowel key U (32) and consonant keys VWXYZ (group 23) may be coloured green. Alternatively, the keys may have a different texture, for example a pattern of protrusions as well or instead of the colour coding.

The arrangement of the consonant characters in alphabetical order coupled with the visual /tactile grouping of the groups of characters makes understanding of the keyboard layout intuitive. A user only needs to know the alphabet which he/she would learn by heart from an early age in order to remember the relative location of the keys. A user will thus find it easier to learn touch typing without having constantly to look down at the keyboard enabling the user to keep his/her eyes on the screen and sit erect, reducing head and shoulder strain.

The remaining keys of the keyboard can be disposed in any preferred form but preferably the function keys such as F1 - F12 are differentiated from the alphabet/numeral/symbol keys by differences in shape of the top finger engaging surface and in this embodiment such a difference is achieved by the top surface of the function keys being made concave while the rest of the keys are convex.

The' keyboard is provided with a plurality of anchor keys, which anchor keys are disposed at a suggested position of rest of the middle finger of one hand of a user. In the present case, the anchor keys are the letters I and S and, for the numerical key pad 40, the number 5. These keys are provided with a dimple or protrusion 50, 51, 52 so that they are identifiable by touch.

All the alphabet keys of the keyboard are aligned in rows and columns rather than staggered like a conventional keyboard to enable the user to navigate orthogonally amongst the keys.

Keys for performing certain locking functions, such as caps lock 60, scroll lock 61 and num lock 62 have indicator lights 63, 64, 65 provided adjacent these keys for easy reference.

Preferably, also, the longitudinal cross section of the keys are contoured to conform to the reach of the fingers at a typical typing position and a detachable wrist rest may be attached to the bottom edge of the keyboard.

Most keyboards use a pair of flexible sheets which are brought together when a key is depressed and make an electrical contact between an electrical connection on one sheet and an electrical connection on the other, this electrical connection identifying the key depressed. Since in the described embodiment, the order of the keys has changed, for the keyboard to be interchangeable with an existing keyboard it is necessary to map the position of the keys of the described embodiment to those of the conventional keyboard, This can be done for example physically by designing the pattern of electrical connections on each sheet so that the electrical connection made by the depression of each individual key corresponds to that of a conventional keyboard, by a hard wired circuit which takes the input from the described embodiment and provides the output expected from a conventional keyboard or by software provided in the computer to which the keyboard is connected.

A comparative example is shown in Figure 2 which shows a screen of a palm computer, for example. The screen is touch sensitive with the arrangement of keys being shown on the screen. A key can be selected by touching the screen with the pen. In a similar way to the embodiment of Figure 1, the consonant keys are divided into a plurality of groups 100 - 104 each separated by a vowel A E I O U. The vowels are provided in a separate group 105, the arrangement being such that all the letters of the alphabet are disposed on five rows, each row commencing with a vowel and the intervening consonants following that vowel.

The embodiment described is not to be construed as limitative. For example, the embodiment may be a cursor-activated keyboard or a hard keyboard attached to the device. Furthermore, although the embodiment of Figure 1 shows a keyboard for use for the computer, this could equally be incorporated into a computer (such as a lap-top), wordprocessor or typewriter, with or without the V-shape.

## Claims

1. An alphabet character input device having a plurality of alphabet character keys comprising consonant and vowel keys (31, 32, 33, 34, 35)
said keys being laid out in a first hand portion (10) of the device for operation by a first hand of a user, and in a second hand portion (20) of the device for operation by a second hand of the user;
the first hand portion (10) being provided with all said vowel keys (31, 32, 33, 34, 35) and a plurality of said consonant keys (11, 12);
the consonant keys (11, 12, 21, 22, 23) being divided into a plurality of alphabetically ordered groups (11, 12, 21, 22, 23), each group being alphabetically separated from the next by a vowel;
the second hand portion (20) being provided with the rest of said alphabet character keys (21, 22, 23) ;
**characterised in that**
the vowel keys are arranged in alphabetical order in an arc, the vowel keys (31, 32) upon which the thumb and the little finger would be placed when the fingers of a left hand of a user naturally fall on the vowel keys (31, 32, 33, 34, 35) are larger than the rest of the vowel keys (33, 34, 35).

2. A device as claimed in claim 1, wherein:
a space key (37), a return key (38) and 3 consonant keys (51) are arranged in an arc,
the space key (37) and return key (38) being disposed at positions upon which the thumb and the little finger would be placed when the fingers of a right hand of a user naturally fall on the keys and are larger then the 3 consonant keys (51).

3. A device as claimed in claim 1 or claim 2, wherein the consonant keys (11, 12, 21, 22, 23) of the first hand portion (10) are alphabetically before the consonant keys (11, 12, 21, 22, 23) of the second hand portion (20).

4. A device as claimed in claim 1 or claim 2, wherein the keys in the first hand portion (10) comprise consonant keys representing letters 'H' and before in the alphabet.

5. A device as claimed in claim 1 or claim 2, wherein the keys in the second hand portion (20) comprise consonant keys representing letters 'J' and after in the alphabet.

6. A device as claimed in claim 1, wherein the keys of each group are in a separate row.

7. A device as claimed in claim 1, wherein the groups (11, 12, 21, 22, 23) are colour-coded.

8. A device as claimed in claim 1, wherein the two portions are spaced portions.

9. A device as claimed in claim 8, wherein the keys of each portion are disposed substantially in rows and the rows are angled relative to each other.

10. A device as claimed in claim 9, wherein the rows of each portion form a V-shape.

11. A device as claimed in claim 9, wherein the angle between the rows is adjustable.

12. A device as claimed in claim 8 or 9, wherein the consonant keys (11, 12, 21, 22, 23) are divided alphabetically between the portions.

13. A device as claimed in claim 1, wherein at least some of the alphabet character keys are aligned in a rectangular grid.

14. A device as claimed in claim 1, further comprising an anchor key formed with a dimple or protrusion.

15. A device as claimed in claim 1 or claim 2, wherein a row of keys representing vowels 'EIO' are below a row of keys representing 'FGH' and above a row of keys representing letters 'BCD' in the first hand portion (10) ; and
in the second hand portion (20), a row of keys representing 'RST' are below a row of keys representing 'LMN' and above a row of keys representing 'XYZ'; and rows of keys representing 'JK' 'PQ' and 'VW' are arranged adjacent the rows of keys representing 'LMN', 'RS' and 'XYZ', respectively.

16. A device as claimed in claim 1, wherein the keys of each group in a separate row are also vertically aligned in columns.

17. A device as claimed in claim 1, wherein the device comprises a keyboard.

18. A device as claimed in any one of claim 1, wherein the device comprises a touch-sensitive screen, the keys being provided as images on the screen.

## Patentansprüche

1. Eingabevorrichtung für alphabetische Zeichen mit mehreren alphabetischen Zeichentasten, die Konsonantentasten und Vokaltasten (31, 32, 33, 34, 35) umfassen, wobei die genannten Tasten in einen Erste-Hand-Bereich (10) der Vorrichtung zur Betätigung mit einer ersten Hand eines Nutzers und einen Zweite-Hand-Bereich (20) der Vorrichtung zur Betätigung mit der zweiten Hand des Nutzers angelegt sind;
der Erste-Hand-Bereich (10) ist mit allen genannten Vokaltasten (31, 32, 33, 34 ,35) und mehreren der genannten Konsonantentasten (11, 12) ausgestattet;
die Konsonantentasten (11, 12, 21, 22, 23) sind in mehrere alphabetisch geordnete Gruppen (11, 12, 21, 22, 23) unterteilt, wobei jede Gruppe von der nächsten durch einen Vokal alphabetisch getrennt ist,
der Zweite-Hand-Bereich (20) ist mit den restlichen der genannten alphabetischen Zeichentasten (21, 22. 23) ausgestattet,
**dadurch gekennzeichnet, dass**
die Vokaltasten in alphabetischer Reihenfolge in einem Bogen angeordnet sind, wobei die Vokaltasten (31, 32), auf denen der Daumen und der kleine Finger abgelegt werden würden, wenn die Finger der linken Hand eines Nutzers in natürlicher Weise auf die Vokaltasten (31, 32, 33, 34, 35) fallen würden, größer sind als die restlichen Vokaltasten (33, 34, 35).

2. Vorrichtung nach Anspruch 1. bei welcher:
eine LeerzeichenTaste (37), eine Retum-Tuste (38) und 3 Konsonantentasten (51) in einem Bogen angeordnet sind, wobei
die Leerzeichentaste (37) und die Return-Taste (38) an Stellen angeordnet sind, an denen der Daumen und der kleine Finger abgelegt werden würden, wenn die Finger der rechten Hand eines Nutzers in natürlicher Weise auf die Tasten fallen würden, und größer sind als die 3 Konsonantentasten (51).

3. Vorrichtung nach Anspruch 1 oder 2, bei welcher die Konsonantentasten (11, 12, 21, 22, 23) des Erste-Hand-Bereiches (10) im Alphabet vor den Konsonantentasten (11, 12, 21, 22, 23) des Zweite-Hand-Bereiches (20) stehen.

4. Vorrichtung nach Anspruch 1 oder 2, bei welcher die Tasten im Erste-Hand-Bereich (10) Konsonantentasten umfassen, die die Buchstaben "H" und die davor im Alphabet stehenden wiedergeben.

5. Vorrichtung nach Anspruch 1 oder 2, bei welcher die Tasten im Zweite-Hand-Bereich (20) die Konsonantentasten umfassen, die die Buchstaben "J" und die danach im Alphabet stehenden wiedergeben.

6. Vorrichtung nach Anspruch 1, bei welcher die Tasten jeder Gruppe in einer separaten Reihe angeordnet sind.

7. Vorrichtung nach Anspruch 1, bei welcher die Gruppen (11, 12, 21, 22, 23) farbkodiert sind.

8. Vorrichtung nach Anspruch 1, bei welcher die beiden Bereiche zueinander beabstandete Bereiche sind.

9. Vorrichtung nach Anspruch 8, hci welcher die Tasten eines jeden Bereiches im Wesentlichen in Reihen und die Reihen in einem Winkel zueinander angeordnet sind.

10. Vorrichtung nach Anspruch 9, bei welcher die Reihen eines jeden Bereiches eine V-Form bilden.

11. Vorrichtung nach Anspruch 9, bei welcher der Winkel zwischen den Reiben einstellbar ist.

12. Vorrichtung nach Anspruch 8 oder 9, bei welcher die Konsonantentasten (11, 12, 21, 22, 23) in alphabetischer Reihenfolge auf die Bereiche verteilt sind.

13. Vorrichtung nach Anspruch 1, bei welcher wenigstens einige der alphabetischen Zeichentasten in einem rechtwinkeligen Raster angeordnet sind.

14. Vorrichtung nach Anspruch 1, die weiterhin eine Feststelltaste umfasst, die mit einer Vertiefung oder Erhebung ausgebildet ist.

15. Vorrichtung nach Anspruch 1 order 2, bei welcher eine Tastenreihe, die die Vokale "EIO" wiedergibt, unterhalb einer "FHG" wiedergebenden Tastenreihe und oberhalb einer Tastenreihe, die die Buchstaben "BCD" wiedergibt, im Erste-Hand-Bereich (10) angeordnet ist, und
im Zweite-Hand-Bereich (20) eine "RST" wiedergebende Tastenreihe unterhalb einer "LMN" wiedergebenden Tastenreihe und oberhalb einer "XYZ" wiedergebenden Tastenreihe angeordnet ist, und
die Tastenreihen, die "JK" "PQ" und "VW" wiedergeben, neben den Tastenreihen angeordnet sind, die jeweils "LMN", RST" und "XYZ" wiedergeben.

16. Vorrichtung nach Anspruch 1, bei welcher die Tasten jeder Gruppe in einer separaten Reihe ebenfalls vertikal in Spalten ausgerichtet sind.

17. Vorrichtung nach Anspruch 1, wobei die Vorrichtung eine Tastatur umfasst.

18. Vorrichtung nach Anspruch 1, wobei die Vorrichtung einen berührungsempfindlichen Bildschirm umfasst und die Tasten auf dem Bildschirm als Bilder bereit gestellt werden.

## Revendications

1. Dispositif d'entrée de caractères alphabétiques comportant une pluralité de touches de caractères alphabétiques comprenant des touches consonnes et voyelles (31, 32, 33, 34, 35),
lesdites touches étant disposées dans une première partie de main (10) du dispositif pour l'opération par une première main d'un utilisateur, et dans une seconde partie de main (20) du dispositif pour l'opération par une seconde main de l'utilisateur ;
la première partie de main (10) étant pourvue de toutes lesdites touches voyelles (31, 32, 33, 34, 35) et d'une pluralité desdites touches consonnes (11, 12) ;
les touches consonnes (11, 12, 21, 22, 23) étant divisées en une pluralité de groupes ordonnés alphabétiquement (11, 12, 21, 22, 23), chaque groupe étant séparé alphabétiquement du suivant par une voyelle ;
la seconde partie de main (20) étant pourvue du reste desdites touches de caractères alphabétiques (21, 22, 23) ;
**caractérisé en ce que**
les touches voyelles sont arrangées par ordre alphabétique dans un arc. les touches voyelles (31, 32) sur lesquelles le pouce et l'auriculaire seraient placés lorsque les doigts d'une main gauche d'un utilisateur tombent naturellement sur les touches voyelles (31, 32, 33, 34, 35) sont plus grandes que le reste des touches voyelles (33, 34, 35).

2. Dispositif selon la revendication 1, dans lequel :
une touche Espace (37), une touche Retour (38) et 3 touches consonnes (51) sont agencées dans un arc,
la touche Espace (37) et la touche Retour (38) étant disposées à des positions sur lesquelles le pouce et l'auriculaire seraient placés lorsque les doigts d'une main droite d'un utilisateur tombent naturellement sur les touches et sont plus grandes que les 3 touches consonnes (51).

3. Dispositif selon la revendication 1 ou la revendication 2, dans lequel les touches consonnes (11, 12, 21, 22, 23) de la première partie de main (10) sont alphabétiquement avant les touches consonnes (11, 12, 21, 22, 23) de la seconde partie de main (20).

4. Dispositif selon la revendication 1 ou la revendication 2, dans lequel les touches dans la première partie de main (10) comprennent des touches consonnes représentant les lettres 'H' et celles qui viennent avant dans l'alphabet.

5. Dispositif selon la revendication 1 ou la revendication 2, dans lequel les touches dans la seconde partie de main (20) comprennent des touches consonnes représentant les lettres 'J' et celles qui viennent après dans l'alphabet.

6. Dispositif selon la revendication 1, dans lequel les touches de chaque groupe se trouvent dans une rangée séparée.

7. Dispositif selon la revendication 1, dans lequel les groupes (11, 12, 21, 22, 23) sont codés par couleurs.

8. Dispositif selon la revendication 1, dans lequel les deux parties sont des parties espacées.

9. Dispositif selon la revendication 8, dans lequel les touches de chaque partie sont disposées sensiblement en rangées et les rangées sont angulaires les unes par rapport aux autres.

10. Dispositif selon la revendication 9, dans lequel les rangées de chaque partie forment un V.

11. Dispositif selon la revendication 9, dans lequel l'angle entre les rangées est réglable.

12. Dispositif selon la revendication 8 ou 9, dans lequel les touches consonnes (11, 12, 21, 22, 23) sont divisées alphabétiquement entre les parties.

13. Dispositif selon la revendication 1, dans lequel au moins certaines des touches de caractères alphabétiques sont alignées dans une grille rectangulaire.

14. Dispositif selon la revendication 1, comprenant en outre une touche ancre formée avec un creux ou une protubérance.

15. Dispositif selon la revendication 1 ou la revendication 2, dans lequel une rangée de touches représentant les voyelles 'EIO' est au-dessous d'une rangée de touches représentant 'FGH' et au-dessus d'une rangée de touches représentant les lettres 'BCD' dans la première partie de main (10) ; et
dans la seconde partie de main (20), une rangée de touches représentant 'RST' est au-dessous d'une rangée de touches représentant 'LMN' et au-dessus d'une rangée de touches représentant 'XYZ' ; et les rangées de touches représentant 'JK', 'PQ' et 'VW' sont agencées adjacentes aux rangées de touches représentant 'LMN', 'RST' et 'XYZ', respectivement.

16. Dispositif selon la revendication 1, dans lequel les touches de chaque groupe dans une rangée séparée sont également alignées verticalement en colonnes.

17. Dispositif selon la revendication 1, dans lequel le dispositif comprend un claver,

18. Dispositif selon la revendication 1, dans lequel le dispositif comprend un écran tactile, les touches étant prévues comme des images sur l'écran.
